# EUROPEAN PATENT SPECIFICATION

(11) **EP 4 312 440 B1**
(45) Date of publication and mention of the grant of the patent: **30.09.2026**
(21) Application number: 22186924.1
(22) Date of filing: 26.07.2022
(51) Int. Cl.: H04W 4/02, B60R 25/24, G01S 5/02, G01S 5/14, G07C 9/00, H04W 4/80, H04W 64/00, H04B 17/318, H04W 12/06, H04W 12/08

(54) **VEHICLE, APPARATUS, COMPUTER PROGRAM, AND A METHOD FOR CONTROLLING A CONNECTION BETWEEN A USER DEVICE AND BLUETOOTH LOW ENERGY, BLE, NODES OF A VEHICLE**
FAHRZEUG, GERÄT, COMPUTERPROGRAMM UND VERFAHREN ZUM STEUERN EINER VERBINDUNG ZWISCHEN EINER BENUTZERVORRICHTUNG UND BLUETOOTH LOW ENERGY, BLE, KNOTEN EINES FAHRZEUGS
VÉHICULE, APPAREIL, PROGRAMME INFORMATIQUE ET PROCÉDÉ DE COMMANDE D'UNE CONNEXION ENTRE UN DISPOSITIF UTILISATEUR ET DES NOEUDS BLUETOOTH À FAIBLE ÉNERGIE, BLE, D'UN VÉHICULE

(43) Date of publication of application: 31.01.2024
(73) Proprietor: Bayerische Motoren Werke Aktiengesellschaft, 80809 München (DE)
(72) Inventor: Mourad, Alaa, 80995 München (DE)

(56) References cited:
- US-A1- 2022 201 586

## Description

Embodiments of the present disclosure relate to a vehicle, an apparatus, a computer program, and a method for controlling a connection between a user device and Bluetooth Low Energy (BLE) nodes of a vehicle. In particular but not exclusively, embodiments relate to a concept for a position-based handover of a communication session of a vehicle and a user device.

In vehicles, communication plays an increasingly important role. For this reason, vehicles may be equipped with various communication means, in particular BLE nodes to communicate with user devices. In some applications, vehicles may be equipped with a plurality of BLE nodes for discovery and (data) communication and UWB nodes for (high accuracy) localization. One or more of the BLE nodes may be installed inside the vehicle while other BLE nodes are installed on the exterior (outside of) the vehicle. In such applications, a user device may establish a connection to one of the BLE nodes. When a user carrying the user device approaches the vehicle, the user device, e.g., connects to one of the BLE nodes in order to unlock the vehicle. However, when the user approaches the vehicle or sat down in the vehicle, the problem may occur that the user device maintains the connection to the connected BLE node, although a connection quality of the connection has become worse and/or insufficient for a desired use.

Document US 2022/201586 A1 relates to an infrastructure controller for an infrastructure such as a building or a vehicle to which a user desires access. The infrastructure controller has a plurality of BLE nodes and is configured to identify one of the plurality of BLE nodes as a current-BLE-node, activate the current-BLE-node for communication with a key using BLE signals, determine a communication-quality-indicator, representing the quality of communication with the key, for each of the plurality of BLE nodes, identify one of the plurality of BLE nodes as a next-BLE-node based on the communication-quality-indicators, provide connection-information to the next-BLE-node using out-of-band signaling, and then deactivating the current-BLE-node and activating the next-BLE-node for continued communication with the key using BLE signals.

Hence, there may be a demand for an approach tackling the aforementioned problem.

This demand may be satisfied by the subject-matter of the appended independent and dependent claims.

Embodiments are based on the finding that a connection quality provided by a BLE node, in particular, depends on a position of a user device relative to the BLE node. In practice, the connection quality may worsen with an increasing distance between the BLE node and the user device. The present disclosure, hence, proposes a vehicle-controlled control mechanism to control a connection between a BLE node and a user device based on a position of the user device. In particular, embodiments of the present disclosure provide for switching from a first to a second BLE node based on a relative position of the user device to the first and the second BLE node. For this, e.g., respective UWB nodes incorporated together with the first and the second BLE node in respective BLE/UWB combined nodes may measure the relative position of the user device and provide their measurements for the proposed position-based control of the connection between the user device and BLE nodes of the vehicle.

Embodiments of the present disclosure provide a method for a vehicle and for controlling a connection between a user device and Bluetooth Low Energy, BLE, nodes of the vehicle. The method comprises establishing a first connection between a first BLE node of the vehicle and the user device and obtaining information on a position of the user device. Further, the method comprises causing that the first connection is terminated and a second connection between the user device and a second BLE node of the vehicle is established based on the information on the position of the user device. The information on the position of the user device allows to check whether a (second) BLE node, which is more preferable than the first BLE node in terms of our respective connection quality, is available for the user device. Therefore, controlling the connection between the user device and vehicle based on the information on the position particularly allows to check whether a more preferable connection is available and, if so, switch BLE nodes for an improved connection quality.

Optionally, obtaining information on the position comprises determining the position of the user device from one or more ultra-wideband, UWB, measurements of at least one UWB node of the vehicle. The UWB measurements may provide a more accurate localization of the user device than, e.g., Bluetooth-based localization approaches and, thus, a more reliable and accurate control of the connection.

In some embodiments, the information on the position of the user device comprises information on a relative position of the user device to the first and the second BLE node, and wherein causing that the first connection is terminated and the second connection is established comprises causing that the first connection is terminated and the second connection is established based on a comparison of the relative position to the first and the second BLE node.

In automotive applications, the vehicle may also comprise one or more UWB nodes, e.g., for presence detection and/or localization for digital car key features. In such applications, the first and the second BLE node, and practice, may be incorporated in BLE/UWB combined node together with UWB nodes. Optionally, obtaining information on the position of the user device comprises obtaining the relative position of the user device to the first BLE node from one or more UWB measurements from a first UWB node incorporated in a first BLE/UWB combined node together with the first BLE node. Accordingly, obtaining the information on the position of the user device may also comprise obtaining the relative position of the user device to the second BLE node from one or more UWB measurements from a second UWB node incorporated in a second BLE/UWB combined node together with the second BLE node. In this way, the technical effort for determining the relative position of the user device to the first and the second BLE node may be reduced. Due to the combined incorporation of the BLE nodes with the UWB nodes, the UWB measurements indicating a relative position to the respective UWB node may be approximately indicative of the relative position to the respective BLE node. Hence, those UWB measurements may be used straightaway for the relative position of the user device (without or less elaborate further processing of the measurements than when using separate UWB nodes).

As the skilled person will understand, the connection quality provided by BLE nodes, may particularly depend on a distance of the user device to the BLE nodes. So, in practice, the information on the relative position of the user device to the first and the second BLE node may comprise information on a distance to the first and the second BLE node (i.e., between the user device and the first/second BLE node). Accordingly, causing that the first connection is terminated and the second connection is established may comprise causing that the first connection is terminated and the second connection is established based on a comparison of the distance to the first and the second BLE node.

In practice, the vehicle may be configured such that it can terminate the connection to the user device by itself (e.g., through a disconnect request/message) in order to cause the user device to reconnect to a BLE node of the vehicle in response to a respective advertising signal of the BLE node. Accordingly, causing that the first connection is terminated and the second connection is established may comprise terminating the first connection by the vehicle and transmitting an advertising signal of the second BLE node to the user device for the user device to establish the second connection in response to the advertising signal.

In some embodiments, the first connection serves for a communication session between the user device and the vehicle. In such cases, a "seamless" transition of the communication session to the second connection may be desired. To this end, causing that the first connection is terminated and the second connection is established may comprise causing a handover of the communication session from the first to the second BLE node. In this way, it may be avoided that the communication session is terminated when switching from the first to the second BLE node. As the skilled person having benefit from the present disclosure will appreciate, that this may avoid the need to reestablish the communication session and, thus, may save communication resources.

For the handover, causing that the first connection is terminated and the second connection is established may comprise instructing the user device to control the handover or controlling the handover by the vehicle. **In** this way, according to desire, a device-controlled or a vehicle-controlled handover is initiated.

As well, embodiments of the present disclosure provide a computer program having a program code for performing an embodiment of the method proposed herein, when the computer program is executed on a computer, a processor, or a programmable hardware component.

Also, embodiments of the present disclosure provide an apparatus comprising one or more interfaces for communication and a data processing circuit configured to control the one or more interfaces and execute, using the one or more interfaces, and embodiment of the method proposed herein.

Other embodiments of the present disclosure provide a vehicle comprising the apparatus proposed herein.

Some examples of apparatuses, methods and/or computer programs will be described in the following by way of example only, and with reference to the accompanying figures, in which
Fig. 1 shows a flow chart schematically illustrating an embodiment of a method for a vehicle and for controlling a connection between a user device and BLE nodes of the vehicle;
Fig. 2 schematically shows an exemplary use case of the proposed concept; and
Fig. 3 shows a block diagram schematically illustrating an apparatus according to the proposed concept.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed, or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes", or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

As mentioned above, vehicles may be equipped with a plurality of BLE nodes, in particular, for communication with user devices, e.g., for digital car key (DCK) applications. Such vehicles might have one or more BLE nodes outside and one or more other BLE nodes inside the vehicle. When approaching the vehicle, a user device might connect to one of the outside nodes. However, after the user carrying the user device has entered the vehicle, the quality of a connection to the connected BLE node might drop and may become worse and/or even insufficient for the desired use, e.g., the digital car key application. This problem especially occurs if windows of the vehicle comprise metal and, therefore, may shield signals of the BLE communication between the user device and the vehicle.

The subject-matter of the present disclosure provides an approach tackling this problem. Various features and aspects of this approach are described in more detail below with reference to the appended drawings.

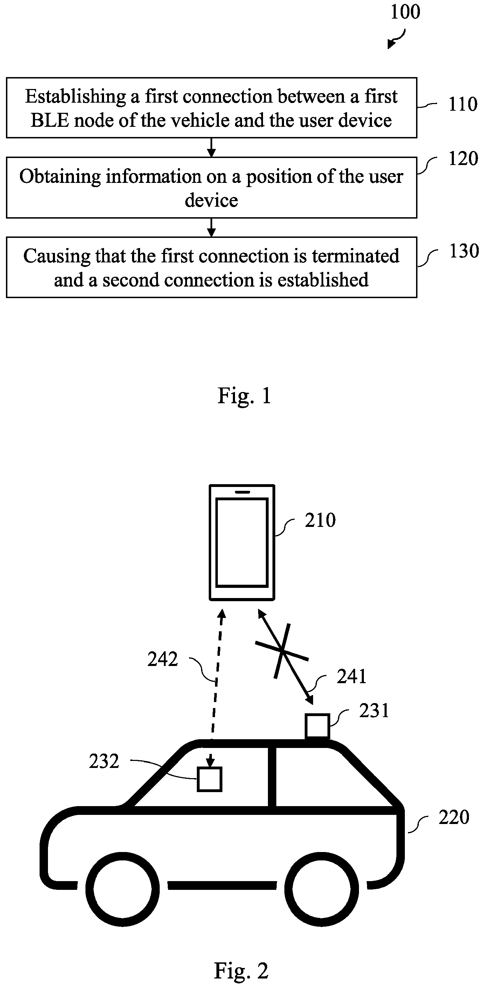

Fig. 1 shows a flow chart schematically illustrating an embodiment of a method 100 for a vehicle and for controlling a connection between a user device and BLE nodes of the vehicle.

The user device can be or comprise any user equipment such as a mobile phone, a laptop, a tablet, a smartwatch, or the like. The vehicle can be any ground vehicle (e.g., car, truck, bus, motorcycle, or the like), aircraft, or watercraft. In context of the present disclosure, the BLE nodes can comprise or correspond to any devices that are installed on the vehicle and serve for other BLE (enabled) devices as local access points or interfaces to a BLE network of the vehicle. In the field, the BLE nodes of the vehicle may be installed at different positions at the vehicle in order to provide a sufficient connection for the user device at different positions inside the vehicle and/or in the environment of the vehicle. One or more BLE nodes, e.g., are installed inside the vehicle while other BLE nodes may be installed on the exterior of vehicle. As well, one or more of them may be installed in the front and one or more other BLE nodes in the back of the vehicle. One or more thereof may be installed on the left-hand side of the vehicle and one or more other BLE nodes on the right-hand side of the vehicle.

Method 100 comprises establishing 110 a first connection between a first BLE node of the vehicle and the user device. For this, the vehicle (and the user device) may be equipped with appropriate means (e.g., a BLE interface, antenna/s, software) for connecting with the (BLE enabled) user device and may exchange data for establishing the first connection and communication according to a BLE communication protocol. In practice, for this, the first BLE node may emit one or more advertising signals/messages for the user device to discover the first BLE node by receiving the advertising messages/signals from the first BLE node and transmit a connection request in response to the advertising message to connect with the first BLE node. The established first connection, then, may be used for various applications. In practice, the first connection, e.g., is used for unlocking the vehicle using the user device in connection with a DCK system of the vehicle. Additionally or alternatively, the first connection may be also used for operating the vehicle, e.g., a remote parking, parking heater, theft protection, and/or the like.

In the field, the user device may compare signal strengths of BLE nodes of the vehicle for connecting to one of them based on their signal strength. Then, the user device may establish the first connection to a preferable (first) BLE node providing a sufficient and/or the highest signal strength. BLE nodes closer to the user device may provide a higher signal strength and, thus, a higher signal strength than BLE nodes farther afar from the user device. Accordingly, the first BLE node may be the one of multiple BLE nodes of the vehicle that is closest to the user device.

As well, the vehicle may shield signals of BLE nodes from the user device. Hence, BLE nodes on the exterior of the vehicle may provide a higher signal strength outside the vehicle then BLE nodes installed inside the vehicle and vice versa. So, e.g., when a user carrying the user device approaches the vehicle from afar, the first connection may be established to a BLE node on the exterior of the vehicle.

In this way, it may be provided that the first BLE node that the user device connects with provides a sufficient and/or the highest signal strength and, thus, the highest connection quality at this time (when connecting with the first BLE node). However, as soon as the first connection has been established the user device or the user carrying the user device may move and, so, change position of the user device. The signal strength provided by the first BLE node, hence, may change. In particular, the signal strength may worsen and, so, may become lower than a signal strength provided by other BLE nodes. In an exemplary scenario, e.g., the user carrying the user device connected to a (first) BLE node on the exterior of the vehicle may enter the vehicle and the signal strength of the first connection may become insufficient. The present disclosure, thus, provides an approach for the vehicle to control a connection with the user device in order to enhance the connection of the user device with the vehicle. To this end, present disclosure suggests a position-based control approach enabling the vehicle to change the BLE node that the user device is connected with for improving the connection between the user device and the vehicle.

For this, method 100 provides for obtaining 120 information on a position of the user device and causing 130 that the first connection is terminated and a second connection between the user device and a second BLE node of the vehicle is established based on the information on the position of the user device. In this way, method 100 may provide that a BLE node for the connection between the user device and the vehicle is switched if the user device is located somewhere where the first BLE node may not provide sufficient signal strength. Otherwise, if the information on the position indicates that the user device is somewhere where the first BLE node provides a sufficient signal strength and/or no other BLE node may have a higher signal strength, the vehicle may provide that the first connection is maintained and may refrain from establishing the second connection.

The information on the position can be or comprise any information that indicates where the user device is located. In practice, the information on the position, e.g., indicates a relative position or distance of the user device to the vehicle, a geographical position of the user device, whether the user device is inside, outside, on the left-hand side, on the right-hand side, behind or in front of vehicle. For obtaining the information on the position, the user device may determine its position, e.g., using a GPS- or GNSS-based localization technique and communicate its position to the vehicle and/or the vehicle may measure the position of the user device, e.g., using a time-of-flight-based localization technique.

The information on the position may at least approximately indicate an expected signal strength and/or connection quality provided by the first BLE node. So, the information on the position may enable the vehicle to determine whether the first BLE node is still suitable for the connection to the vehicle and, thus, whether it is reasonable to switch to another BLE node of the vehicle.

So, based on the information on the position, the vehicle may, e.g., only cause that the first connection is terminated and the second connection is established (that BLE nodes are "switched") if, according to the information on the position, the first BLE node is not suitable (anymore). For example, if the user device moves away from the first BLE node such that the signal strength may get insufficient according to the information on the position and the connection is transferred from the first to the second BLE node in favor of an improved connection.

In practice, the user device may be configured such that it cannot be connected to more than one BLE node simultaneously. Hence, prior to establishing the second connection, the first connection may be terminated first and the second connection may be only established after the first connection has been terminated. In order to cause that the first connection is terminated, the vehicle, e.g., transmits a disconnect request/message to the user device in order to cause the user device to stop the communication via the first connection. For establishing the second connection with the second BLE node, the user device, in practice, may (by itself or automatically) try to re-establish the connection (establish the second connection) to the vehicle. Therefore, the user device may be configured to select a preferred BLE node to connect with. For this, the user device, e.g., receives one or more advertising signals from one or more BLE nodes and determines, based on the advertising signals, a respective signal strength provided by the BLE nodes in order to select, based on the signal strength, a favorable BLE node or preferably the one with the highest signal strength as the second BLE node for the second connection. Subsequently, the user device may connect with the second BLE node in response to the advertising signal from the second BLE node.

In some embodiments, the information on the position may be also used to determine a signal strength of one or more other BLE nodes in order to switch BLE nodes based on a comparison of the signal strength of the first and other BLE nodes. In this way, the vehicle may ensure that the second BLE node provides a higher signal strength than the first BLE node.

The skilled person having benefit from the present disclosure will not only appreciate that the proposed position-based connection control technique provides a better connection between the user device and the vehicle but also allows to dispense with direct measurements of the signal strength at the user device which may reduce a technical complexity vis-à-vis signal-strength-based connection control techniques.

As the skilled person will understand, the information on the position, e.g., may be determined from one or more UWB measurements of at least one UWB node of the vehicle. In doing so, a distance of the user device to the vehicle may be determined once or multiple times, e.g., regularly. According to the proposed position-based connection control technique, the connection, then, may be controlled based on the distance. In an exemplary scenario, the first BLE node connected with the user device may be installed on the exterior of the vehicle and the distance may indicate that the user device got into the vehicle since the first connection to the first BLE node has been established. **In** such a scenario, the vehicle may shield signals of the first BLE node from the user device located inside the vehicle and one or more BLE nodes installed inside the vehicle may provide a higher signal strength. According, to the present disclosure, the vehicle may then provide according to the proposed position-based connection control technique that the first connection is terminated and the user device connects with the second BLE node. In the present scenario, the second BLE node, e.g., may be a BLE node which is installed inside the vehicle.

In the field, also multiple UWB nodes may be used to determine the position of the user device more accurately, e.g., using triangulation techniques. In this way, as well, a direction where the user device is located may be determined. The direction, e.g., indicates whether the user device is located left, right, in front of or behind the car. As the skilled person will understand, the direction may allow an even more accurate localization of the user device relative to BLE nodes of the vehicle. The more accurate localization, then, may allow a more accurate position-based control of the connection, e.g., it allows to determine more accurately whether it is reasonable to switch BLE nodes and/or identify the most favorable BLE node for the user device to switch to. In scenarios where the first BLE node is installed on the left-hand side of the vehicle and the user device moved from the left-hand side to the right-hand side of the vehicle, the vehicle may provide that the first connection with the first BLE node is terminated such that the second connection with the second BLE node, which may be on the right-hand side of the vehicle, is established.

In some embodiments, the information on the position of the user device comprises information on a relative position of the user device to the first and the second BLE node in order to compare the relative position of the user device to the first and the second BLE node. Then, the vehicle may provide that the BLE nodes are switched based on the comparison of the relative position to the first and the second BLE node. In practice, the relative position to the first and the second BLE node, e.g., indicates a respective distance to the first and the second BLE node, i.e., a first distance to the first BLE node and a second distance to the second BLE node, a direction where the user device is located, and/or whether the vehicle shields the user device from signals of the first and/or the second BLE node. The comparison of those distances, then, indicates whether the first or the second BLE node is more favorable for the connection and, if the comparison indicates that the second BLE node is more favorable, the vehicle may provide that the user device switches to the second BLE node according to the proposed technique.

In practice, the first and the second BLE node may be incorporated together with a respective UWB node in a mutual node, herein also referred to as "BLE/UWB combined node". In doing so, the respective BLE and UWB node implemented together in a respective BLE/UWB combined node may at least partly share hardware with each other, e.g., a processing circuit and/or one or more antennas, for the benefit of a higher functional density and reduced resource requirements. In the field, the combined BLE and UWB node may be (considered as) located at the same place or adjacent to each other. Hence, UWB measurements of a respective UWB node combined with one of the BLE nodes may be "directly" used to determine the relative position, e.g., the distance, of the user device to a respective BLE node. So, UWB measurements of the UWB node combined with the first BLE node may be used for determining the relative position to the first BLE node and UWB measurements of the UWB node combined with the second BLE node may be used for determining the relative position to the second BLE node.

Accordingly, obtaining the information on the position of the user device may comprise obtaining the relative position of the user device to the first BLE node from one or more UWB measurements from a first UWB node incorporated in a first BLE/UWB combined node together with the first BLE node and obtaining the relative position of the user device to the second BLE node from one or more UWB measurements from a second UWB node incorporated in a second BLE/UWB combined node together with the second BLE node.

As the skilled person will understand, this way, the UWB measurements have a separate respective spatial reference point at or adjacent to the respective first or second BLE node. Consequently, the UWB measurements or their outcome do not need to be processed to be used for the proposed position-based connection control such as UWB measurements of one or more separate UWB nodes distant from the first and the second BLE node do. Hence, the proposed use of the BLE/UWB combined nodes may require less computational and/or technical effort than separate UWB nodes.

In practice, the information on the relative position of the user device to the first and the second BLE node comprises information on a distance to the first and the second BLE node. In other word, the information on the relative position (relative) to the first BLE node is indicative of a distance of the user device to the first BLE node and the information on the relative position (relative) to the second BLE node is indicative of a distance of the user device to the second BLE node.

Accordingly, the vehicle may decide based on a comparison of the distance to the first and the second BLE node whether the BLE node for the connection to the user device is switched. The comparison, e.g., indicates that the second BLE node is closer to the user device than the first BLE node and the vehicle, hence, may provide that the user device switches to the second BLE node. Otherwise, if the first BLE node is closer to the user device, the vehicle may provide that the first connection is maintained.

In some applications, the first connection serves for a communication session between the user device and the vehicle. In this case, method 100 may provide for a handover of the communication session from the first to the second BLE node.

The handover may be controlled by the user device or the vehicle. Accordingly, the proposed method may provide for instructing the user device to control the handover or controlling the handover by the vehicle. As the skilled person will understand, in some embodiments, the handover may be alternatively controlled by the user device as well as by the vehicle.

Further aspects and details of the proposed concept are described below with reference Fig. 2.

Fig. 2 schematically shows an exemplary use case of the proposed concept. The use case provides that a user device 210 and a vehicle 220 are connected, e.g., for operating the vehicle 220 using the user device. For this, vehicle 220 is equipped with a first BLE node incorporated together with a first UWB node in a first BLE/UWB combined node 231 and a second BLE node incorporated together with a second UWB node in a second BLE/UWB combined node 232. The second BLE/UWB combined node 232 is installed inside the vehicle and the first BLE/UWB combined node 231 is installed on the exterior of the vehicle. So, when a user carrying the user device 210 approaches the vehicle 220, the user device may establish a first connection 241 with the first BLE node as it is the only BLE node which is discovered by the user device 210 and/or as it provides a sufficient, a preferred, and/or the highest connection quality among the BLE nodes of the vehicle 220 and, thus, may be preferred over the second BLE node (inside the vehicle). Once the first connection 241 has been established, it may serve a communication session, i.e., an interrelated exchange or communication of signals or messages for a (the same) predefined function or series of functions, between the user device and the vehicle 220. In practice, the communication session, e.g., serves for unlocking a vehicle door when the user approaches the vehicle 220 and may be later used for presence detection and/or for starting the vehicle 220. In this way, the user can unlock the vehicle 220 such that the user can open the vehicle door using the user device 210 and sit down in the vehicle 220. However, when the user sat down in the vehicle and/or after closing the vehicle door, signals of the first BLE node may be shielded by the vehicle 220 such that a connection quality of the first connection 241 may drop (worsen) and may even become insufficient, e.g., for presence detection. In turn, the user device may be closer to the second BLE node and signals from the second BLE node may be less or not shielded from the user device 210 inside the vehicle 220.

The first and the second UWB node may regularly execute UWB measurements indicating a relative position to the first and the second BLE node. In doing so, the UWB measurements may indicate that the user device got into the vehicle 220 where signals of the first BLE node may be shielded by the vehicle from the user device. So, considering that the signal strength of the first BLE node, thus, may be insufficient at the user device 210, the vehicle 220 may decide based on the UWB measurements that it is reasonable to switch the BLE node for the connection with the user device 210. To this end, the vehicle 220 transmits a disconnect request/message to the user device 210. Consequently, the user device 210 abandons the first connection and may automatically search for another BLE node to re-establish the connection with the vehicle 220. In doing so, the user device 210 preferably may select the BLE node providing the highest signal strength measured at the user device 210 from respective advertising signals from one or more BLE nodes of the vehicle 220. Since the second BLE node is installed inside the vehicle 220, it may provide the highest signal strength and, thus, may be selected for reconnecting to the vehicle 220. Thereby, the user device 210 abandons the first connection and establishes a better second connection 242 with the vehicle 220.

In some applications, it may be desired to transfer the ongoing communication session from the first to the second BLE node when switching to the second BLE node. As the skilled person having benefit from the present disclosure will appreciate that, therefore, a handover (also referred to as "handoff") of the communication session from the first connection to the second connection may be performed when terminating the first connection 241 and establishing the second connection 242. In this way, the communication session is maintained and interruptions thereof are avoided. In practice, the handover may be an active handover, wherein the vehicle proactively terminates the first connection 241 for switching to the second BLE node before the first BLE connection is terminated "by itself" due to a too weak signal, e.g., when the user device 210 or the vehicle 220 does not receive any signal within a predefined timeout period.

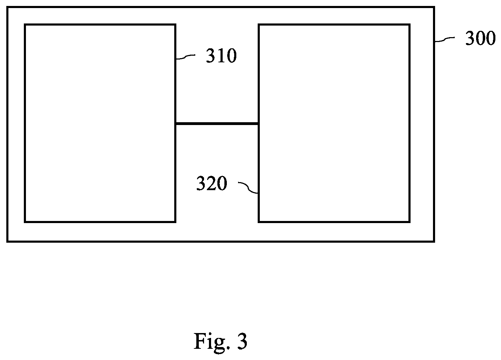

As the skilled person will understand, the proposed concept can be also implemented in a respective apparatus, as stated in more detail below with reference to Fig. 3.

Fig. 3 shows a block diagram schematically illustrating an embodiment of an apparatus 300 implementing the proposed concept.

As can be seen from Fig. 3, apparatus 300 comprises one or more interfaces 310 for communication and a data processing circuit 320 configured to control the one or more interfaces 310. The data processing circuit 320 is further configured to control the one or more interfaces 310 and execute, using the one or more interfaces 310, an embodiment of method 100.

In embodiments the one or more interfaces 310 may comprise means for communication with vehicles or another server. For this, the one or more interfaces 310 may comprise or correspond to any means for obtaining, receiving, transmitting, or providing analog or digital signals or information, e.g., any connector, contact, pin, register, input port, output port, conductor, lane, etc. which allows providing or obtaining a signal or information. An interface may be wireless or wireline and it may be configured to communicate, i.e. transmit or receive signals, information with further internal or external components. The one or more interfaces 310 may comprise further components to enable according communication, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, and/or the like. The one or more interfaces 310 may be coupled to one or more antennas, which may correspond to any transmit and/or receive antennas, such as horn antennas, dipole antennas, patch antennas, sector antennas, and/or the liked. The antennas may be arranged in a defined geometrical setting, such as a uniform array, a linear array, a circular array, a triangular array, a uniform field antenna, a field array, combinations thereof, and/or the like.

As shown in Fig. 3, the one or more interfaces 310 are coupled to the data processing circuit 320. In embodiments the data processing circuit 320 may comprise any means for processing information according to the proposed method. The data processing circuit 320 may be implemented using one or more processing units, one or more processing devices, any means for processing, such as a processor, a computer or a programmable hardware component being operable with accordingly adapted software. In other words, the described functions of the data processing circuit 320 may as well be implemented in software, which is then executed on one or more programmable hardware components. Such hardware components may comprise a general-purpose processor, a Digital Signal Processor (DSP), a micro-controller, and/or the like.

A person of skill in the art would readily recognize that steps of various above-described methods can be performed by programmed computers. In some embodiments, the apparatus may also comprise program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art and are to be construed as being without limitation to such specifically recited examples and conditions. Moreover, all statements herein reciting principles, aspects, and embodiments of the invention, as well as specific examples thereof, are intended to encompass equivalents thereof.

When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the detailed description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of those.

The apparatus 300, in practice, may be implemented in a user device (e.g., user device 210) or a vehicle (e.g., vehicle 220).

### References

- 100: method for a vehicle and for controlling a connection
- 110: establishing a first connection
- 120: obtaining information on a position of the user device
- 130: causing that the first connection is terminated and a second connection is established
- 210: user device
- 220: vehicle
- 231: first BLE/UWB combined node
- 231: second BLE/UWB combined node
- 241: first connection
- 242: second connection
- 300: apparatus
- 310: one or more interfaces
- 320: data processing circuit

## Claims

1. A method (100) for a vehicle (220) and for controlling a connection between a user device (210) and Bluetooth Low Energy, BLE, nodes of the vehicle (220), the method (100) comprising:
establishing (110) a first connection (241) between a first BLE node of the vehicle (220) and the user device (210);
obtaining (120) information on a position of the user device (210); and
causing (130) that the first connection (241) is terminated and a second connection (242) between the user device (210) and a second BLE node of the vehicle (220) is established based on the information on the position of the user device (210).

2. The method (100) of claim 1, wherein obtaining (120) information on the position comprises determining the position of the user device (210) from one or more ultra-wideband, UWB, measurements of at least one UWB node of the vehicle (220).

3. The method (100) of claim 1 or 2, wherein the information on the position of the user device (210) comprises information on a relative position of the user device (210) to the first and the second BLE node, and wherein causing (130) that the first connection (241) is terminated and the second connection (242) is established comprises causing that the first connection (241) is terminated and the second connection (242) is established based on a comparison of the relative position to the first and the second BLE node.

4. The method (100) of claim 3, wherein obtaining (120) information on the position of the user device comprises:
obtaining the relative position of the user device (210) to the first BLE node from one or more UWB measurements from a first UWB node incorporated in a first BLE/UWB combined node (231) together with the first BLE node; and
obtaining the relative position of the user device to the second BLE node from one or more UWB measurements from a second UWB node incorporated in a second BLE/UWB combined node (232) together with the second BLE node.

5. The method (100) of claim 3 or 4, wherein the information on the relative position of the user device (210) to the first and the second BLE node comprises information on a distance to the first and the second BLE node, and wherein causing (130) that the first connection (241) is terminated and the second connection (242) is established comprises causing that the first connection (241) is terminated and the second connection (242) is established based on a comparison of the distance to the first and the second BLE node.

6. The method (100) of any one of the preceding claims, wherein causing (130) that the first connection (241) is terminated and the second connection (242) is established comprises terminating the first connection (241) by the vehicle and transmitting an advertising signal of the second BLE node to the user device (210) for the user device (210) to establish the second connection (241) in response to the advertising signal.

7. The method (100) of any one of the preceding claims, wherein the first connection (241) serves for a communication session between the user device (210) and the vehicle (220), and wherein causing (130) that the first connection (241) is terminated and the second connection (242) is established comprises causing a handover of the communication session from the first to the second BLE node.

8. The method (100) of claim 7, wherein causing that the first connection (241) is terminated and the second connection (242) is established comprises instructing the user device (210) to control the handover or controlling the handover by the vehicle (220).

9. A computer program having a program code for performing the method (100) of any one of the preceding claims, when the computer program is executed on a computer, a processor, or a programmable hardware component.

10. An apparatus (300) comprising:
one or more interfaces (310) for communication; and
a data processing circuit (320) configured to:
control the one or more interfaces (310); and
execute, using the one or more interfaces (310), the method (100) of any one of the claims 1 to 8.

11. A vehicle (220) comprising the apparatus (300) of claim 10.

## Patentansprüche

1. Verfahren (100) für ein Fahrzeug (220) und zum Steuern einer Verbindung zwischen einer Benutzervorrichtung (210) und Bluetooth-Low-Energy-, BLE-, Knoten des Fahrzeugs (220), wobei das Verfahren (100) Folgendes umfasst:
Herstellen (110) einer ersten Verbindung (241) zwischen einem ersten BLE-Knoten des Fahrzeugs (220) und der Benutzervorrichtung (210);
Erhalten (120) von Informationen über eine Position der Benutzervorrichtung (210); und
Bewirken (130), dass die erste Verbindung (241) beendet wird und eine zweite Verbindung (242) zwischen der Benutzervorrichtung (210) und einem zweiten BLE-Knoten des Fahrzeugs (220) basierend auf den Informationen über die Position der Benutzervorrichtung (210) hergestellt wird.

2. Verfahren (100) nach Anspruch 1, wobei das Erhalten (120) von Informationen über die Position Bestimmen der Position der Benutzervorrichtung (210) aus einer oder mehreren Ultrabreitband-, UWB-, Messungen mindestens eines UWB-Knotens des Fahrzeugs (220) umfasst.

3. Verfahren (100) nach Anspruch 1 oder 2, wobei die Informationen über die Position der Benutzervorrichtung (210) Informationen über eine relative Position der Benutzervorrichtung (210) zu dem ersten und dem zweiten BLE-Knoten umfassen, und wobei das Bewirken (130), dass die erste Verbindung (241) beendet wird und die zweite Verbindung (242) hergestellt wird, Bewirken, dass die erste Verbindung (241) beendet wird und die zweite Verbindung (242) basierend auf einem Vergleich der relativen Position zu dem ersten und dem zweiten BLE-Knoten hergestellt wird, umfasst.

4. Verfahren (100) nach Anspruch 3, wobei das Erhalten (120) von Informationen über die Position der Benutzervorrichtung Folgendes umfasst:
Erhalten der relativen Position der Benutzervorrichtung (210) zu dem ersten BLE-Knoten aus einer oder mehreren UWB-Messungen von einem ersten UWB-Knoten, der zusammen mit dem ersten BLE-Knoten in einen ersten kombinierten BLE-/UWB-Knoten (231) integriert ist; und
Erhalten der relativen Position der Benutzervorrichtung zu dem zweiten BLE-Knoten aus einer oder mehreren UWB-Messungen von einem zweiten UWB-Knoten, der zusammen mit dem zweiten BLE-Knoten in einen zweiten kombinierten BLE-/UWB-Knoten (232) integriert ist.

5. Verfahren (100) nach Anspruch 3 oder 4, wobei die Informationen über die relative Position der Benutzervorrichtung (210) zu dem ersten und dem zweiten BLE-Knoten Informationen über einen Abstand zu dem ersten und dem zweiten BLE-Knoten umfassen, und wobei das Bewirken (130), dass die erste Verbindung (241) beendet wird und die zweite Verbindung (242) hergestellt wird, Bewirken, dass die erste Verbindung (241) beendet wird und die zweite Verbindung (242) basierend auf einem Vergleich des Abstands zu dem ersten und dem zweiten BLE-Knoten hergestellt wird, umfasst.

6. Verfahren (100) nach einem der vorhergehenden Ansprüche, wobei das Bewirken (130), dass die erste Verbindung (241) beendet wird und die zweite Verbindung (242) hergestellt wird, Beenden der ersten Verbindung (241) durch das Fahrzeug und Übertragen eines Ankündigungssignals des zweiten BLE-Knotens an die Benutzervorrichtung (210), damit die Benutzervorrichtung (210) die zweite Verbindung (241) als Reaktion auf das Ankündigungssignal herstellt, umfasst.

7. Verfahren (100) nach einem der vorhergehenden Ansprüche, wobei die erste Verbindung (241) für eine Kommunikationssitzung zwischen der Benutzervorrichtung (210) und dem Fahrzeug (220) dient, und wobei das Bewirken (130), dass die erste Verbindung (241) beendet wird und die zweite Verbindung (242) hergestellt wird, Bewirken einer Übergabe der Kommunikationssitzung von dem ersten zu dem zweiten BLE-Knoten umfasst.

8. Verfahren (100) nach Anspruch 7, wobei das Bewirken, dass die erste Verbindung (241) beendet wird und die zweite Verbindung (242) hergestellt wird, Anweisen der Benutzervorrichtung (210), die Übergabe zu steuern, oder Steuern der Übergabe durch das Fahrzeug (220) umfasst.

9. Computerprogramm mit einem Programmcode zum Durchführen des Verfahrens (100) nach einem der vorhergehenden Ansprüche, wenn das Computerprogramm auf einem Computer, einem Prozessor oder einer programmierbaren Hardwarekomponente ausgeführt wird.

10. Einrichtung (300), die Folgendes umfasst:
eine oder mehrere Schnittstellen (310) zur Kommunikation; und
eine Datenverarbeitungsschaltung (320), die zu Folgendem ausgelegt ist:
Steuern der einen oder der mehreren Schnittstellen (310); und
Ausführen, unter Verwendung der einen oder der mehreren Schnittstellen (310), des Verfahrens (100) nach einem der Ansprüche 1 bis 8.

11. Fahrzeug (220), das die Einrichtung (300) nach Anspruch 10 umfasst

## Revendications

1. Procédé (100) destiné à un véhicule (220) et à commander une connexion entre un dispositif (210) d'utilisateur et des nœuds Bluetooth à faible énergie, BLE, du véhicule (220), le procédé (100) comprenant :
l'établissement (110) d'une première connexion (241) entre un premier nœud BLE du véhicule (220) et le dispositif (210) d'utilisateur ;
l'obtention (120) d'informations sur une position du dispositif (210) d'utilisateur ; et
le fait de provoquer (130) l'arrêt de la première connexion (241) et l'établissement d'une seconde connexion (242) entre le dispositif (210) d'utilisateur et un second nœud BLE du véhicule (220) sur la base des informations relatives à la position du dispositif (210) d'utilisateur.

2. Procédé (100) selon la revendication 1, l'obtention (120) d'informations sur la position comprenant la détermination de la position du dispositif (210) d'utilisateur à partir d'une ou plusieurs mesures à bande ultra-large, UWB, d'au moins un nœud UWB du véhicule (220).

3. Procédé (100) selon la revendication 1 ou 2, les informations sur la position du dispositif (210) d'utilisateur comprenant des informations sur une position relative du dispositif (210) d'utilisateur au premier et au second nœud BLE, et le fait de provoquer (130) l'arrêt de la première connexion (241) et l'établissement de la seconde connexion (242) comprenant le fait de provoquer l'arrêt de la première connexion (241) et l'établissement de la seconde connexion (242) sur la base d'une comparaison de la position relative par rapport au premier et au second nœud BLE.

4. Procédé (100) selon la revendication 3, l'obtention (120) d'informations sur la position du dispositif d'utilisateur comprenant :
l'obtention de la position relative du dispositif (210) d'utilisateur par rapport au premier nœud BLE à partir d'une ou de plusieurs mesures UWB provenant d'un premier nœud UWB incorporé dans un premier nœud combiné BLE/UWB (231) conjointement avec le premier nœud BLE ; et l'obtention de la position relative du dispositif d'utilisateur par rapport au second nœud BLE à partir d'une ou de plusieurs mesures UWB provenant d'un second nœud UWB incorporé dans un second nœud combiné BLE/UWB (232) conjointement avec le second nœud BLE.

5. Procédé (100) selon la revendication 3 ou 4, les informations sur la position relative du dispositif (210) d'utilisateur par rapport au premier et au second nœuds BLE comprenant des informations sur une distance au premier et au second nœud BLE, et le fait de provoquer (130) l'arrêt de la première connexion (241) et l'établissement de la seconde connexion (242) comprenant le fait de provoquer l'arrêt de la première connexion (241) et l'établissement de la seconde connexion (242) sur la base d'une comparaison de la distance au premier et au second nœud BLE.

6. Procédé (100) selon l'une quelconque des revendications précédentes, le fait de provoquer (130) l'arrêt de la première connexion (241) et l'établissement de la seconde connexion (242) comprenant l'arrêt de la première connexion (241) par le véhicule et la transmission d'un signal d'annonce du second nœud BLE au dispositif (210) d'utilisateur pour que le dispositif (210) d'utilisateur établisse la seconde connexion (241) en réponse au signal d'annonce.

7. Procédé (100) selon l'une quelconque des revendications précédentes, la première connexion (241) servant à une session de communication entre le dispositif (210) d'utilisateur et le véhicule (220), et le fait de provoquer (130) l'arrêt de la première connexion (241) et l'établissement de la seconde connexion (242) comprenant le fait de provoquer un transfert de la session de communication du premier au second nœud BLE.

8. Procédé (100) selon la revendication 7, le fait de provoquer l'arrêt de la première connexion (241) et l'établissement de la seconde connexion (242) comprenant l'instruction au dispositif (210) d'utilisateur de commander le transfert ou la commande du transfert par le véhicule (220).

9. Programme informatique comportant un code de programme pour la réalisation du procédé (100) selon l'une quelconque des revendications précédentes, lorsque le programme informatique est exécuté sur un ordinateur, un processeur ou un composant matériel programmable.

10. Appareil (300) comprenant :
une ou plusieurs interfaces (310) pour la communication ; et
un circuit (320) de traitement de données configuré pour :
commander l'interface ou les interfaces (310) ; et exécuter, en utilisant l'interface ou les interfaces (310), le procédé (100) selon l'une quelconque des revendications 1 à 8.

11. Véhicule (220) comprenant l'appareil (300) selon la revendication 10.
